# EUROPEAN PATENT APPLICATION

(11) **EP 1 894 747 A2**
(43) Date of publication of application: **05.03.2008**
(21) Application number: 07252909.2
(22) Date of filing: 23.07.2007
(51) Int. Cl.: B60C 1/00, B60C 13/00

(54) **Pneumatic tire provided with temperature-sensitive color-changing part**

(30) Priority: 30.08.2006 JP 2006234568; 30.08.2006 JP 2006234512; 30.08.2006 JP 2006234426
(71) Applicant: Toyo Tire Rubber Co., Ltd., Osaka-shi, Osaka 550-0002 (JP)
(72) Inventor: Tsuruta, Atsushi, Nishi-ku, Osaka-shi Osaka 550-0002 (JP)
(74) Representative: Brown, Kenneth Richard

(57) **Abstract**

Disclosed is a pneumatic tire (10) provided with a temperature-sensitive color-changing rubber part (30) formed through vulcanization of a rubber composition that comprises a rubber component, and temperature-sensitive color-changing microcapsules with, as encapsulated therein, a temperature-sensitive color-changing component of which the color may reversibly change with temperature change, and that is obtained by directly mixing and dispersing the microcapsules in the rubber component. The temperature-sensitive color-changing rubber part (30) may constitute at least a part of the tire body. The rubber part (30) may be a coating film formed by applying a coating composition comprising the rubber composition onto the outer surface of a tire, and shaping it through vulcanization along with the tire body. Further, it may constitute a display layer of a color seal to be stuck to the outer surface of a tire.

## Description

### Cross-reference to Related Applications

This application is based upon and claims the benefit of priority from the prior Japanese Patent Applications Nos. 2006-234426, 2006-234512 and 2006-234568, filed on August 30, 2006; the entire contents of which are incorporated herein by reference.

### Background

The present application relates to a pneumatic tire comprising a rubber composition of which the color changes with temperature change, and to a color seal for tires of which the color changes with temperature change.

Heretofore, in pneumatic tires, it is tried to dispose a color rubber except black in the sidewall part thereof, for the purpose of enhancing their visibility and fashionability. However, when a color rubber is used, it has only one color and its color does not change, and therefore its appealing characteristic to users in point of the improvement of fashionability may be low.

JP-A-2000-185528 and JP-A-2003-049021 disclose using a luminous phosphor-containing rubber composition as a sidewall part of a tire, thereby increasing the nighttime visibility and the decorative fashionability of the tire. However, the effect of the visibility and the fashionability of such a phosphor rubber are limited only in the nighttime.

On the other hand, Japanese Utility Model Registration No. 3123072 discloses a tire having a temperature-sensitive color sensor of which the color changes depending on temperature, partly in the surface and the grooves of the tire. However, this reference has a mere description saying that the material of the temperature-sensitive color sensor part could be a coating composition of which the color changes depending on temperature, or a rubber that contains a component of which the color changes depending on temperature.

JP-UM-A-03-112403 discloses a tire with a temperature-indicating emblem stuck to the outer surface thereof, a tire coated with a temperature-indicating material, or a tire mixed with a temperature-indicating material, thereby improving the fashionability of the tire or showing the heating condition of the tire. However, this reference merely describes, as the temperature-indicating material, a liquid-crystal thermometer comprising a cholesteric liquid crystal, or a temperature-indicating material comprising a mercury iodide complex or the like.

JP-A-2003-104014 and JP-A-53-11407 disclose a technique of providing a thermotropic liquid crystal in the sidewall part of a tire, thereby improving the fashionability of the tire or showing any accident of the tire. Such a thermotropic liquid crystal changes its molecular arrangement with temperature change, thereby changing the wavelength of the reflecting light thereon, and therefore its outward appearance color may be seen to change. However, its heat resistance is low. Accordingly, in these references, a thermotropic liquid crystal is not mixed with a rubber composition, but it is stuck to a vulcanized and molded tire with a binder to thereby dispose the thermotropic liquid crystal in the sidewall part of the tire. Therefore, the workability is poor, and there is another problem in that it may be peeled during driving, or that is, its durability is poor.

Heretofore, on the tread surface of a pneumatic tire, provided are a color differentiation line extending in the peripheral direction of a tire, and a color print of color letters or symbols, for the purpose of specifically identifying the lot number and the size of tread rubber (see JP-A-11-59125).

As the coating material for forming such a conventional color differentiation line or color print, used is an ordinary pigment of which the color does not change. Accordingly, the color differentiation line and the color print merely have a function of specifically identifying the tread rubber in tire production and a function of specifically identifying the tire itself after produced; and there is known no idea of using them for visibly identifying the temperature condition of a tire.

On the other hand, in a pneumatic tire, various patterns such as figures, letters, symbols, photographs and designs are displayed on its outer surface as visible informations, for the purpose of improving the design value of the tire and for recognizing and differentiating tire informations.

For displaying such informations on a tire, in general, patterns are made engraved on the tire surface. However, those with informations engraved on the tire surface require patterned molds for every pattern and therefore lack in versatility, and, in addition, the color of the engraved pattern must be the same as that of the tire; and moreover, the expense for mold production is enormous, therefore causing one factor of increasing the tire production cost.

Accordingly, in place of the above-mentioned engraving, proposed is a color seal for tires that comprises a display layer capable of displaying various color informations except black, and an adhesive layer having the display layer laminated thereon and adhering it onto the outer surface of a tire through vulcanization (see JP-A-10-222069, JP-A-2005-178638). When the color seal of the type is used, then a versatile mold may be used in vulcanization, and in addition, since the seal is adhered to the outer surface of a tire through vulcanization, it may follow the deformation of the tire and may not peel or drop off. However, an ordinary pigment or dye of which the color does not change is used in the above display layer, and therefore, the color seal has only one color and its color does not change, and its appealing characteristic to users in point of the improvement of fashionability may be low.

As a color seal for tires, also proposed is another that has a display layer mixed with a luminous phosphor material (see JP-A-2003-118297), in which, however, the luminous phosphor material may exhibit its visibility and design value only in the nighttime.

US Patent Application 2005/0139142 discloses a tire having a temperature indicator that contains a temperature-sensitive color-changing material, further disclosing that the temperature-sensitive color-changing material may comprise microcapsules of a temperature-sensitive color-changing component. In this reference, however, used is a dispersion of the microcapsules in polyvinyl chloride (PVC). Accordingly, the dispersibility of the temperature-sensitive color-changing material in a rubber component is poor and the rubber composition could not attain uniform coloring as a whole. In addition, when such a master batch of a temperature-sensitive color-changing material in a resin such as PVC is used, it must be mixed and dispersed at a temperature not lower than the melting point of the resin for uniformly dispersing it; but at such a high temperature, the microcapsules may be broken, or they may be damaged by thermal history. In addition, the compatibility of the resin master batch of the type with a rubber component is problematic, and a rubber component must be selected in accordance with the resin.

### Summary

The present invention has been made in consideration of the above-mentioned points, and its object is to change the color of a tire depending on the ambient temperature and on the heat generated by driving, thereby improving the fashionability and the design value of the tire, and visualizing the tire temperature condition. In addition, another object of the invention is to improve the colorability of the tire.

The pneumatic tire of the invention is provided with a temperature-sensitive color-changing rubber part formed through vulcanization of a rubber composition that comprises a rubber component and temperature-sensitive color-changing microcapsules with, as encapsulated therein, a temperature-sensitive color-changing component of which the color may reversibly change with temperature change, and is obtained by directly mixing and dispersing the microcapsules in the rubber component.

In the first embodiment of the invention, the temperature-sensitive color-changing rubber part constitutes at least a part of the tire body. In the second embodiment, the temperature-sensitive color-changing rubber part is a coating film formed by applying a coating material that comprises the rubber composition to the outer surface of a tire body, followed by vulcanizing it along with the tire body. In the third embodiment, the temperature-sensitive color-changing rubber part constitutes a display layer of a color seal. In the third embodiment, a pneumatic tire is formed by using a color seal that comprises a display layer of the rubber composition for displaying an information, and an adhesive layer for adhering it to the outer surface of a tire, and sticking the color seal to the outer surface of a tire, and fixing it thereon through vulcanization along with the tire body.

### Brief Description of the Drawings

Fig. 1 is a half-sectional view of a pneumatic tire of one example of the first embodiment.
Figs. 2A to 2C are enlarged cross-sectional views of an essential part, showing a process of producing the pneumatic tire.
Figs. 3A and 3B are perspective conceptual views showing a color-changing condition of the pneumatic tire.
Fig. 4 is an enlarged cross-sectional view of an essential part of a pneumatic tire of another example of the first embodiment.
Figs. 5A and 5B are perspective views showing a color-changing condition of a pneumatic tire of one example of the second embodiment.
Fig. 6 is a partly enlarged perspective view of the pneumatic tire.
Fig. 7 is a perspective view of a color seal for tires of one example of the third embodiment.
Figs. 8A and 8B are plan view showing a color-changing condition of the color seal.
Fig. 9 is a schematic cross-sectional view of a tire in vulcanization, with the color seal stuck thereto.
Fig. 10 is an enlarged cross-sectional view of an essential part of the tire formed through vulcanization.
Fig. 11 is a side view of a tire sidewall part of the tire.
Fig. 12 is a cross-sectional view of a color seal of another example of the third embodiment.

### Detailed Description

### [First Embodiment]

The pneumatic tire of the first embodiment is provided with, as at least a part of the tire body, a temperature-sensitive color-changing rubber part formed through vulcanization of a rubber composition that comprises a rubber component, a non-carbon black filler, and temperature-sensitive color-changing microcapsules with, as encapsulated therein, a temperature-sensitive color-changing component of which the color may reversibly change with temperature change, and that is obtained by directly mixing and dispersing the microcapsules in the rubber component.

In this embodiment, the temperature-sensitive color-changing rubber part that contains temperature-sensitive color-changing microcapsules changes its color with temperature change of the ambient temperature or inner heat generation during driving. Accordingly, as compared with conventional color rubber and fluorescent rubber, the appealing characteristic of the rubber part to users in point of the fashionability thereof is high. In addition, depending on the temperature set for the temperature-sensitive color-changing part, an abnormal heating condition may be visible, and the safety of the tire may be thereby increased. In addition, the temperature-sensitive color-changing rubber part is formed through vulcanization at least as a part of the tire body, and is not separately installed after the formation of the tire through vulcanization, and therefore, its workability and durability is excellent.

Further, since the microcapsules are not dispersed in a resin but are directly mixed and dispersed in the rubber component, the microcapsules may be uniformly dispersed in the rubber matrix owing to the shear force during mixing with rubber, with inhibiting the temperature elevation as much as possible. Accordingly, the rubber composition may have a uniform coloring effect as a whole, and the thermal history to the microcapsules may be suppressed and the damage thereto may be reduced, and the rubber composition may attain excellent coloration.

In the rubber composition, the rubber component is not specifically limited, and various rubber polymers may be used for it. For example, it includes natural rubber (NR), polyisoprene rubber (IR), polybutadiene rubber (BR), styrene-butadiene rubber (SBR), ethylene-propylene rubber (EPDM or EPM), butyl rubber (IIR), halogenated butyl rubber, chloroprene rubber (CR), acrylonitrile-butadiene rubber (NBR); and one or more of these may be used herein either singly or as combined. Preferably used is halogenated butyl rubber having excellent weather resistance, such as brominated butyl rubber (BR-IIR) and chlorinated butyl rubber (Cl-IIR). More precisely, preferred for use herein is a blend rubber of halogenated butyl rubber and natural rubber and/or polyisoprene rubber.

As a filler, a non-carbon black filler is incorporated in the rubber composition, and carbon black is not substantially used therein. When carbon black is incorporated in it, then the temperature-sensitive color-changing material could not attain a coloring effect. The non-carbon black filler is, for example, a white filler such as silica, clay, talc, alumina, calcium carbonate, magnesium carbonate, aluminium hydroxide, zinc oxide, magnesium oxide, titanium oxide. One or more of these may be used herein either singly or as combined. Not specifically limited, the amount of the non-carbon black filler to be incorporated is preferably from 30 to 120 parts by weight relative to 100 parts by weight of the rubber component for ensuring the reinforcing effect of the filler.

In the rubber composition, used are temperature-sensitive color-changing microcapsules with, as encapsulated therein, a temperature-sensitive color-changing component capable of reversibly changing its color with temperature change, as the temperature-sensitive color-changing material therein. As encapsulated in microcapsules, the composition of the temperature-sensitive color-changing component may be kept constant and the component may stably exhibit its color-changing effect.

Preferably, the temperature-sensitive color-changing component comprises an electron-donating coloring organic compound, an electron-accepting compound and a color-changing temperature controller, as it may ensure heat resistance to the vulcanizing temperature of rubber. As ensuring heat resistance, the component may keep its excellent color-changing effect even after tire molding through vulcanization.

As the temperature-sensitive color-changing component, for example, herein usable are those disclosed in JP-A-2003-313453, 2005-220201.

Precisely, the electron-donating coloring organic compound is a component capable of inducing color reaction with an electron-accepting compound for color expression, and in general, a leuco dye is used for it. The leuco dye may be any known one. For example, it includes triphenylmethane phthalides, fluorans, indolylphthalides, leucoauramines, spiropyrans; and one or more such leuco dyes may be used singly or as combined for controlling the color in coloration.

The electron-accepting compound is a color developer component capable of inducing color reaction with the electron-donating coloring organic compound for color expression. For example, it includes phenols, bisphenols, triazoles, aromatic carboxylic acids, aliphatic carboxylic acids, phosphoric acids, and their esters, ethers, metal salts.

The color-changing temperature controller is a desensitizer component that melts or fuses to retard electron transfer between the electron-donating coloring organic compound and the electron-accepting compound, thereby controlling the color reaction temperature. For example, usable for it are organic mediums such as alcohols, esters, ethers, fatty acids. The setting of the color-changing temperature by the color-changing temperature controller may be suitably attained by varying the type or the composition of the organic medium, depending on the object. For example, for color change in ordinary driving for the purpose of improving the fashionability of the tire, the color-changing temperature may be set at 30 to 40°C. On the other hand, for example, for visualizing the abnormality of the sidewall part of the tire during driving under a low inner pressure, the color-changing temperature may be set at 45 to 60°C.

For encapsulating the temperature-sensitive color-changing component in microcapsules, for example, employable are known methods of forming microcapsules, such as a coacervation method, an in-situ polymerization method, an interfacial polymerization method. Not specifically limited, the mean particle size of the microcapsules may be generally from 0.5 to 100 µm, preferably from 0.5 to 20 µm.

Such temperature-sensitive color-changing microcapsules are, for example, Matsui Shikiso Chemical's "Chromicolor" and Nippon Capsule Products' "ETSD powder". However, as will be mentioned hereinunder, it is desirable to obtain and use those in the form of powder but not in the form of a master batch with resin, for directly mixing and dispersing the microcapsules in a rubber component.

Not specifically limited, the amount of the temperature-sensitive color-changing microcapsules to be incorporated is preferably from 1 to 20 parts by weight relative to 100 parts by weight of the rubber component for the rubber composition to be shaped through vulcanization for use as a part of a tire body.

In general, a vulcanizing agent is incorporated in the rubber composition for shaping it through vulcanization. The vulcanizing agent to be used may be generally a sulfur-containing vulcanizing agent such as sulfur, thiuram polysulfide, morpholine derivatives; but a non-sulfur crosslinking agent may also be used such as organic peroxides and metal peroxides. Not specifically limited, the amount of the vulcanizing agent to be incorporated is generally preferably from 0.1 to 10 parts by weight relative to 100 parts by weight of the rubber component.

As other ingredients, various additives generally used in rubber compositions for tires may be added to the above-mentioned rubber composition, such as stearic acid, zinc flower, softening agent, coupling agent, plasticizer, and vulcanization accelerator. However, it is desirable that such additives are all non-contaminating chemicals, or that is, those not substantially coloring the rubber component that is the base of the composition. Accordingly, it is desirable that a contaminating antioxidant is not substantially incorporated in the rubber composition.

In preparing the rubber composition, the microcapsules are directly mixed and dispersed in a rubber component. In other words, the microcapsules are not dispersed in a resin such as PVC, but are mixed, stirred and dispersed in a rubber component while they are in the form of a powder by themselves. The rubber polymer that is a viscoelastic material may disperse the powdery microcapsules uniformly in the matrix by the shear force during stirring and mixing with suppressing thermal history.

In detail, for example, in the first step, a rubber component and a non-carbon black filler are put in a mixer and mixed therein while the powdery microcapsules are, directly as they are, added to and mixed with them therein. Next, in the second step, a vulcanizing agent is added to and mixed with it to obtain a rubber composition. Not specifically defined, the mixer may be any one capable of mixing a rubber composition therein. For example, it includes Banbury mixer, kneader, roll mill, blender mixer.

The pneumatic tire of this embodiment is obtained by using the above-mentioned rubber composition in forming a tire through vulcanization. The vulcanization condition for tire is not specifically limited. In general, the vulcanization may be attained at 140 to 180°C for 10 to 30 minutes.

In this embodiment, the whole rubber part of a tire may be formed of the above-mentioned rubber composition, but in general, the rubber composition is used partly. In other words, a temperature-sensitive color-changing rubber part formed of the rubber composition is provided at least partly in the tread part, the sidewall part and the bead part of a tire. In this case, each of the tread part, the sidewall part and the bead part may be entirely formed of the temperature-sensitive color-changing rubber part, or each part may be partly formed of the temperature-sensitive color-changing rubber part. In any case, it is desirable that the temperature-sensitive color-changing rubber part is provided on the outer surface side of the tire so as to be visually seen from the outside. Preferably, all or a part of the sidewall part is formed of the temperature-sensitive color-changing rubber part.

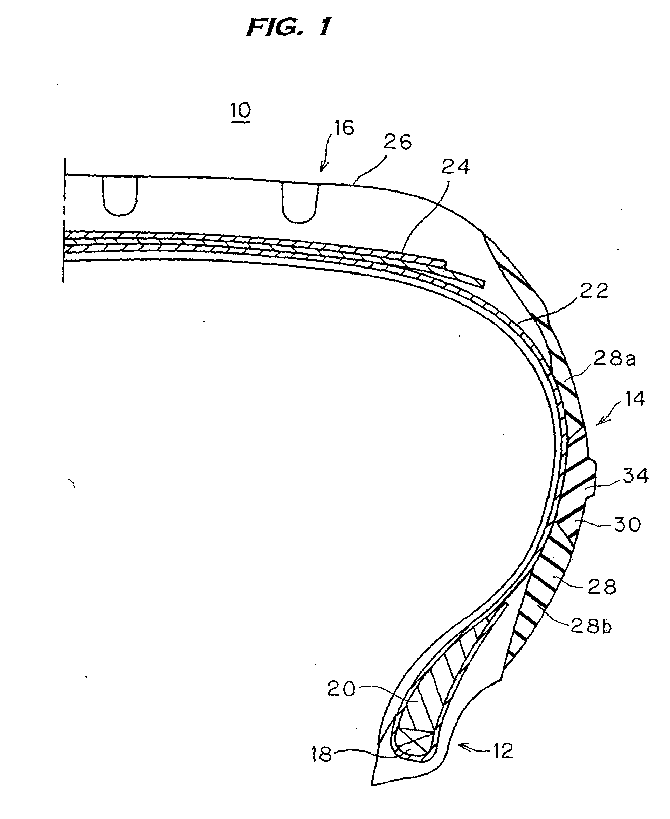

Fig. 1 is a half-sectional view of a pneumatic tire 10 of one example of the first embodiment. The tire 10 is so constituted as to comprise a pair of right and left bead parts 12 and sidewall parts 14, and a tread part 16 that extends to bridge both sidewall parts 14. In the bead part 12, buried are a ring-shaped bead core 18 and a rubber-formed bead filler 20 on the outer side in the radial direction thereof. Between the pair of right and left bead cores 18, provided is a carcass layer 22 that comprises a large number of cords aligned at a right angle to the peripheral direction of the tire; and both ends of the carcass layer 22 is anchored to the bead core 18. On the outer side in the radial direction of the carcass layer 22 in the tread part 16, provided is a belt layer 24 formed of a non-elastic cord; and on the outer side in the tire radial direction of the belt layer 24, provided is a tread rubber 26. On the outer side of the carcass layer 22 in the sidewall part 14, provided is a sidewall rubber 28.

In the tire 10 having the constitution as above of this example, a part of the sidewall rubber 28 is a temperature-sensitive color-changing rubber part 30 formed of the above-mentioned rubber composition; and precisely, the center part in the radial direction of the sidewall rubber 28 is the temperature-sensitive color-changing rubber part 30, and both the upper and lower sides of the part are ordinary black sidewall rubber parts 28a and 28b.

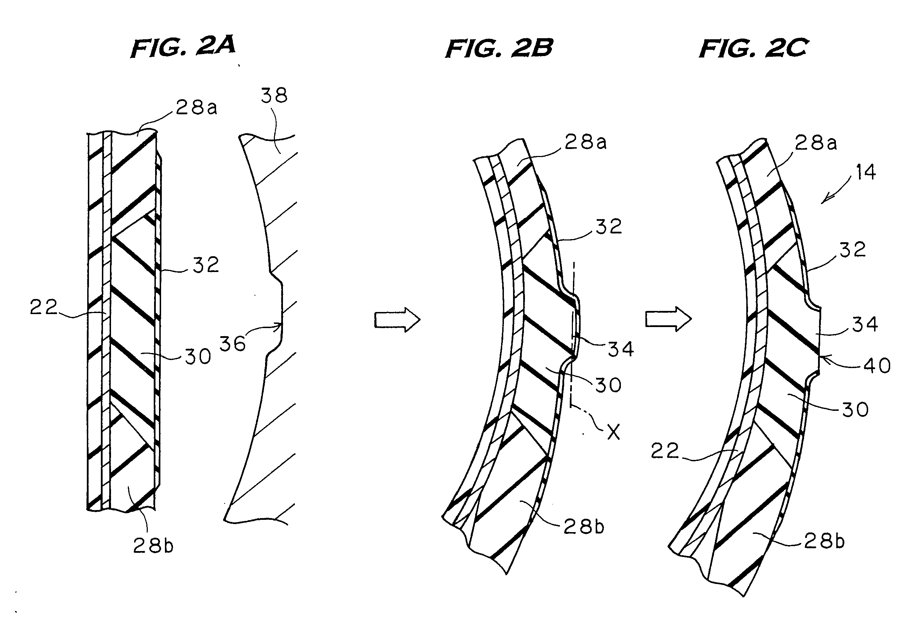

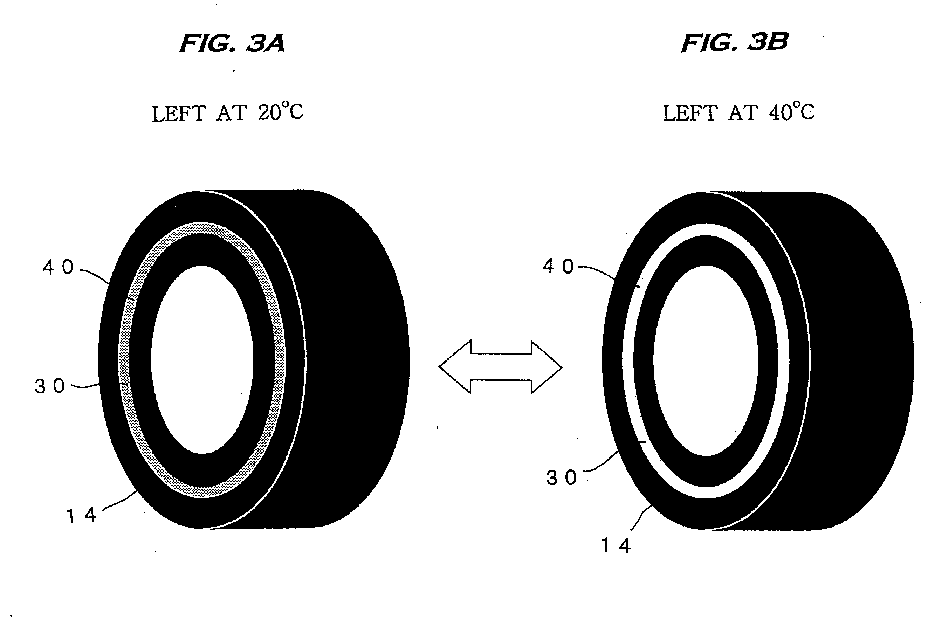

As shown in an enlarged manner in Fig. 2C, the temperature-sensitive color-changing part 30 of the surface of the sidewall part 14 is covered with a cover rubber layer 32. The cover rubber layer 32 is a black rubber layer having the same color as that of the ordinary sidewall rubber parts 28a, 28b; and this partly covers the temperature-sensitive color-changing rubber part 30 so that the non-covered part may exhibit outside a predetermined display information 40 such as figure, letter, symbol, pattern, etc. Specifically, a part of the temperature-sensitive color-changing rubber part 30 not covered by the cover rubber layer 32 is exposed outside to form the display information 40. As in Figs. 3A and 3B, in this example, a ring-patterned display information 40 is formed that extends to the entire periphery of the tire in the peripheral direction thereof. The cover rubber layer 32 is formed of a non-contaminating rubber composition not containing a contaminating chemical such as antioxidant, so as not contaminate the temperature-sensitive color-changing rubber part 30.

The structure shown in Fig. 2C may be formed by providing a projection 34 in the surface of the sidewall part 14, and cutting off the cover rubber layer 32 of the surface layer from the projection 34. Specifically, as shown in Fig. 2A, on the outer side of a carcass layer 22, laminated are sidewall rubber parts 28a, 28b and a temperature-sensitive color-changing rubber part 30 therebetween; and a cover rubber layer 32 is further laminated on its outer side to produce a green tire. Then, using a mold 38 that has a depression 36 to form the projection 34 extending in the peripheral direction on the surface of the temperature-sensitive color-changing rubber part 30, the green tire is vulcanized and molded. After thus molded through vulcanization, as in Fig. 2B, the cover rubber layer 32 on the top surface of the projection 34 is cut off as shown by the one-dotted line X, whereby a predetermined part of the temperature-sensitive color-changing rubber part 30 is exposed out as in Fig. 2C. Thus constructed, the predetermined display information 40 may be formed accurately and in a simplified manner.

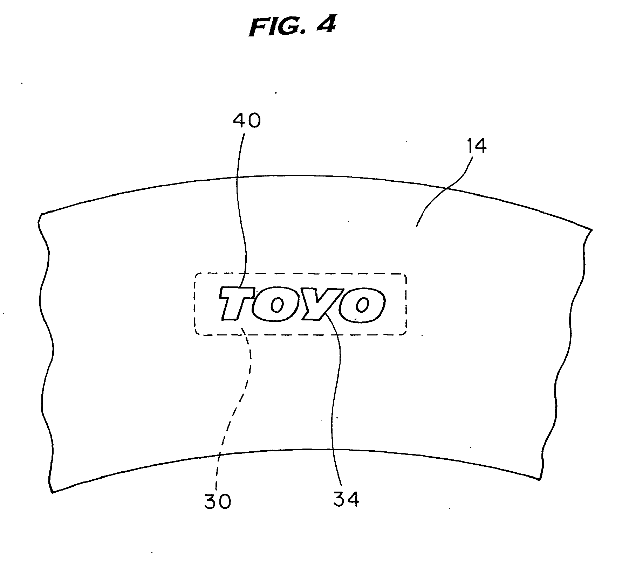

The mode of the display information 40 of the temperature-sensitive color-changing rubber part 30 shown in Figs. 3A and 3B is only one example, and in this invention, any other various display informations may be formed. For example, as in Fig. 4, a letter information 40 may be provided in a part of the sidewall part 14 in the peripheral direction thereof. The letter information may also be formed according to the same method described hereinabove with reference to Figs. 2A to 2C. In addition, other various informations may also be formed in any other side than the sidewall part as in the above.

### [Second Embodiment]

The pneumatic tire of the second embodiment is produced by applying onto the outer surface of a tire, a coating composition that comprises a rubber composition comprising a rubber component and temperature-sensitive color-changing microcapsules with, as encapsulated therein, a temperature-sensitive color-changing component of which the color may reversibly change with temperature change, and obtained by directly mixing and dispersing the microcapsules in the rubber component, followed by shaping it through vulcanization.

According to this embodiment, the temperature-sensitive color-changing rubber part formed of the temperature-sensitive color-changing material-containing coating composition on the outer surface of the tire changes its color with temperature change of the ambient temperature or inner heat generation during driving. Accordingly, the temperature condition of a tire is visible, and for example, the tread residual heat condition of a motor sports tire is readily visible and the tire may be readily prevented from broken through low-temperature brittlement. In particular, when the tire differentiation line or the color print heretofore used for specifically identifying a tread or a tire itself are formed of a coating composition that contains the above-mentioned temperature-sensitive color-changing material, then the temperature condition of the tire may become visible not requiring any additional production steps, and the production costs may be reduced and an influence on the tire performance may be inhibited.

In this embodiment, used is a coating composition that comprises a rubber composition prepared by directly mixing and dispersing the above-mentioned microcapsules in a rubber component, not previously dispersing them in a resin, and therefore, the microcapsules may be uniformly dispersed in the rubber matrix owing to the shear force during mixing with and dispersing in rubber, with inhibiting the temperature elevation as much as possible, and their processability is excellent. In addition, since they are uniformly dispersible, they may enjoy a uniform coloring effect as a whole of the coating film; and further, the thermal history to the microcapsules may be suppressed and the damage thereto may be reduced, and the rubber composition may attain excellent coloration.

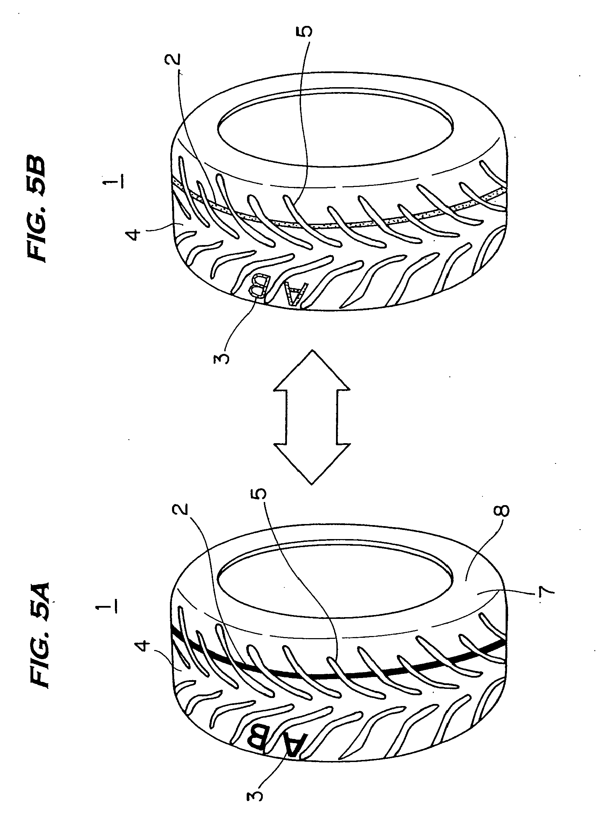

Figs. 5A and 5B show a pneumatic tire 1 of one example of this embodiment. The tire 1 has a color differentiation line 2 and a color print 3 formed, on the tread surface 4, of a coating composition that contains a temperature-sensitive color-changing material of which the color reversibly changes with temperature change. The coating composition has any other color than black so that it may be differentiated from the tire body that is black. In this example, Fig. 5A shows the tire at a low temperature, in which the color differentiation line 2 and the color print 3 are in red; and Fig. 5B shows the tire at a high temperature, in which they are in white.

The coating composition may be prepared by dissolving a rubber composition that comprises a rubber component and a temperature-sensitive color-changing material, in a solvent.

As the rubber component, usable are the same various rubber polymers as those exemplified hereinabove for the first embodiment; and preferred are dienic rubbers such as natural rubber.

The temperature-sensitive color-changing material may also be the same as that described hereinabove for the first embodiment. In this embodiment, the color-changing temperature may be set as follows, depending on the color-changing temperature controller used: For example, for motor sports tires, the color-changing temperature may be set at 45 to 60°C for visibility of the residual heat condition of tread. On the other hand, for visibility of the low-temperature brittlement condition, the color-changing temperature may be set at 0 to 10°C. In this embodiment, the amount of the temperature-sensitive color-changing microcapsules to be incorporated is not specifically limited, but preferably, the proportion thereof is from 1 to 20 % by weight of the whole rubber composition (by mass except the solvent therein) that constitutes the coating composition.

The other ingredients that may be incorporated into the rubber composition may also be the same as those in the first embodiment. In this embodiment, when a non-carbon black filler is incorporated as a filler, then its amount is not specifically limited, but is preferably from 20 to 120 parts by weight relative to 100 parts by weight of the rubber component. The method for preparing the rubber composition may also be the same as in the first embodiment, and its explanation is omitted herein.

In this embodiment, the rubber composition is formulated with an organic solvent such as toluene, and stirred and dispersed in a stirrer to give a color coating composition for tire. Thus obtained, the coating composition is applied on the outer surface of an unvulcanized tire. Precisely, in this embodiment, the coating composition is applied onto the surface of an unvulcanized tread rubber.

The coating application for the color differentiation line 2 may be attained, for example, by contacting a transfer roller that has a coating composition adhering to the outer peripheral surface thereof, with the surface of a tread rubber that is extruded out through an extruder and fed on a conveyor; and accordingly, the tire differentiation line extending in the peripheral direction of the tread surface is thereby transferred and formed on the tread surface. For the color print 3, for example, a transfer plate having predetermined letters or symbols and having the above-mentioned coating composition applied thereto is contacted with the surface of a tread rubber extruded out through an extruder, whereby the intended color print may be transferred and formed on the tread surface.

The color differentiation line 2 may be a line that continues in the peripheral direction of tire as in Fig. 5A, or may be a line having a cut part in the peripheral direction thereof. The number of the lines is not specifically limited, and one or more lines may be formed.

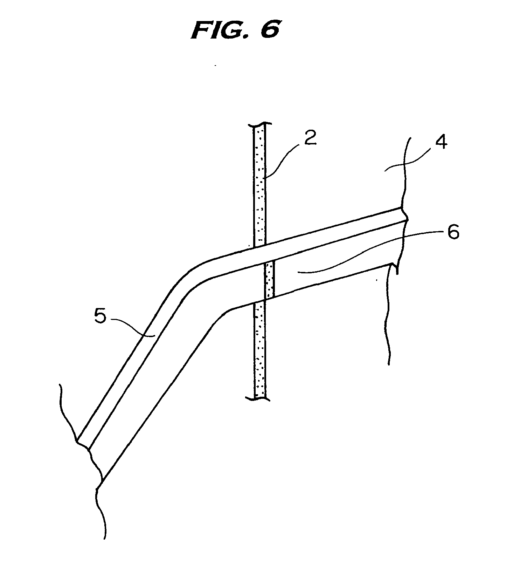

After coated as in the above, the tire is vulcanized and molded in a vulcanization mold according to an ordinary method, thereby giving a pneumatic tire; and on the tread surface 4 of the obtained tire, provided are the color differentiation line 2 and the color print 3 that are the temperature-sensitive color-changing rubber part formed of a coating film of the above-mentioned, vulcanized rubber composition. Since the coating film is formed through vulcanization integrally with the tire outer surface, it hardly peels off and its workability is excellent. In case where lateral grooves 5 that cross in the tire peripheral direction are formed on the tread surface 4 in molding through vulcanization and where the lateral grooves 5 are provided in the site in which the color differentiation line 2 and the color print 3 are to be formed, the color differentiation line 2 and the color print 3 are formed also on the groove bottom 6 (see Fig. 6).

Thus formed, the color differentiation line 2 and the color print 3 changes their color with temperature change of the ambient temperature or inner heat generation during driving. Accordingly, they may have their intrinsic function of specifically identifying the tread and the tire themselves, but may provide the visibility of the temperature condition of the tire; and for example, in motor sports tires, they enables the visibility of the tire temperature before driving. As one example, when a tire is warmed up with a warming jacket, then the warming condition may be confirmed. In addition, in rim construction of a motor sports tire formed of a high-Tg rubber composition, or during transportation thereof, the low-temperature brittlement condition of the tire, if any, may be visualized for the purpose of evading the damage to the tire by shock. Moreover, when the color differentiation line 2 and the color print 3 are formed on the groove bottom 6 as in the above, the tire temperature may be visualized by the differentiation line 2 and the color print 3 remaining on the groove bottom 6, after driving.

One example is described hereinabove, in which the above-mentioned coating composition is applied to a tire to form the color differentiation line 2 and the color print 3 thereon, thereby making the tire have the function of visualizing the tire temperature, to which, however, this embodiment should not be limited. The above-mentioned coating composition may be applied for the purpose of improving the designing and decorative effect of a tire and for the purpose of enabling the visibility of an abnormal heat generation condition of a tire; and the coating site is not limited to the tread surface 4, but may be any other surface of a buttress 7 or the sidewall part 8.

### [Third Embodiment]

The color seal for tires of the third embodiment comprises a display layer capable of reversibly changing its color with temperature change for displaying an information, and an adhesive layer for adhering it to the outer surface of a tire, in which the display layer is formed of a rubber composition that comprises a rubber component and temperature-sensitive color-changing microcapsules with, as encapsulated therein, a temperature-sensitive color-changing component of which the color may reversibly change with temperature change, and is obtained by directly mixing and dispersing the microcapsules in the rubber component. The pneumatic tire of this embodiment has the color seal stuck to the outer surface of the tire and is formed through vulcanization.

In this embodiment, the display layer that contains the temperature-sensitive color-changing microcapsules therein changes its color with temperature change of the ambient temperature or inner heat generation during driving. Accordingly, as compared with conventional color seals comprising pigment, dye or fluorescent material, its design value is increased and its appealing characteristic to users is high. In addition, the color seal makes it possible to visualize the temperature condition of tires, therefore increasing the safety of tires through visual recognition of an abnormal heating condition of tires. In addition, it may be utilized as a means for preventing tires from being damaged or broken by shock given during tire transportation, by visually recognizing the low-temperature brittleness condition of tires.

Further, since the microcapsules are not dispersed in a resin but are directly mixed and dispersed in the rubber component, the microcapsules may be uniformly dispersed in the rubber matrix owing to the shear force during mixing with rubber, with inhibiting the temperature elevation as much as possible, and their workability is excellent. In addition, since the microcapsules may be uniformly dispersed, they may exhibit a uniform coloring effect in the whole display layer; and since the thermal history to the microcapsules may be suppressed, the damage thereto may be reduced and the color seal may attain excellent coloration.

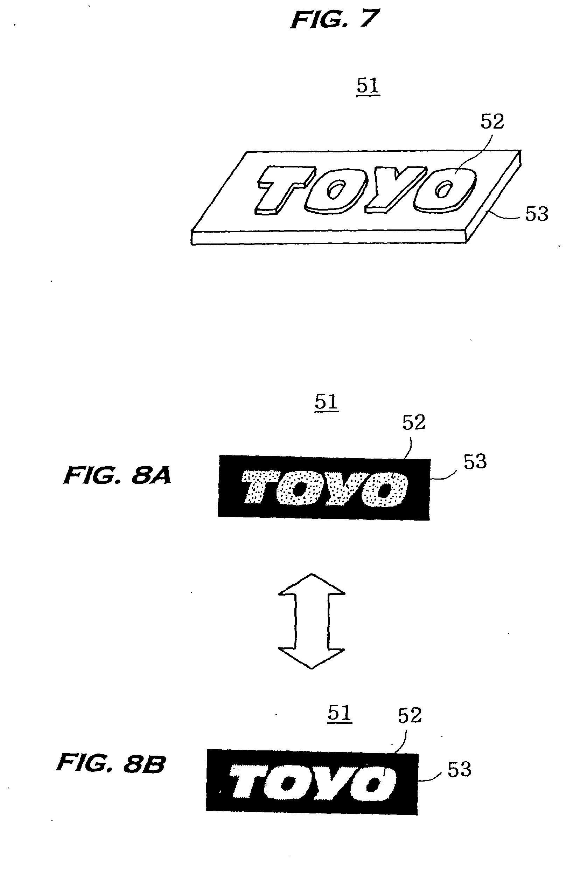

Fig. 7 shows a color seal 51 for tires of one example of this embodiment. The color seal 51 comprises a display layer 52 for displaying, on the surface of a tire, an information of various patterns that comprise at least any of figures, letters, symbols, photographs, designs, bar codes, etc., and an adhesive layer 53 capable of adhering to a tire on which the display layer 52 is disposed and laminated.

The display layer 52 is, as in Figs. 8A and 8B, a temperature-sensitive color-changing rubber part of a temperature-sensitive color-changing rubber composition capable of reversibly changing its color with temperature change, in which the rubber composition contains a rubber component, a non-carbon black filler and a temperature-sensitive color-changing material. In this example, Fig. 8A shows the color seal at a low temperature, in which the information is in red; and Fig. 8B shows the color seal at a high temperature, in which the information is in white.

As the rubber component, usable are the same various rubber polymers as those exemplified hereinabove for the first embodiment; and preferred is a blend rubber of halogenated butyl rubber and natural rubber and/or polyisoprene rubber.

The non-carbon black filler may also be the same as that described hereinabove for the first embodiment. In this embodiment, the amount of the non-carbon black filler to be incorporated is preferably from 40 to 120 parts by weight relative to 100 parts by weight of the rubber component.

The temperature-sensitive color-changing material may also be the same as that described hereinabove for the first embodiment. In this embodiment, the color-changing temperature may be set like in the first embodiment, depending on the color-changing temperature controller used; and in addition, it may also be set as follows: For example, for racing tires, the color-changing temperature may be set at 0 to 10°C for visibility of the low-temperature brittlement condition thereof. In this embodiment, the amount of the temperature-sensitive color-changing microcapsules to be incorporated is not specifically limited, but preferably, the proportion thereof is from 1 to 20 % by weight of the whole rubber composition for use in the display layer of the color seal for tires.

The other ingredients to be incorporated into the rubber composition and the method for preparing the rubber composition may be the same as in the first embodiment, and their explanation is omitted herein.

The display layer 52 may be formed by sheeting the above-mentioned, temperature-sensitive color-changing rubber composition, and it may be laminated on and integrated with the sheet surface of the adhesive layer 53. As in Fig. 7, the display layer 52 may be shaped to have a form that displays an information by itself; or not shown, it may be formed as a mere sheet, and a cover rubber layer to form a display shape may be provided on its surface so that the part of the display layer not covered by the cover rubber layer may exhibit outside the intended information.

The information includes various letters and patterns such as those indicating the appellation or the logo mark of the tire manufacturer or dealer, the mark indicating the tire rotation direction, the trade name of the tire; and these are displayed as vivid colors of white, red, yellow, green and others, as opposed to the black color of the tire body. Not specifically limited, the thickness of the display layer 52 may be generally from about 5 to 100 µm, preferably from about 10 to 50 µm.

Not specifically defined, the formulation of the adhesive layer 53 preferably comprises a rubber composition capable of being stuck to the outer surface of a tire and vulcanized and adhered thereto. More preferably, the adhesive layer disclosed in JP-A-2005-178638 is applied to it. Concretely, a rubber composition is preferably used, which is comprises from 30 to 50 parts by weight of at least one of natural rubber and polyisoprene rubber and from 50 to 70 parts by weight of halogenated butyl rubber in 100 parts by weight of a rubber component. Also preferably, the rubber component accounts for at least 70 % by volume of the whole rubber composition. When the rubber composition of the type is used, then the adhesive layer 53 provided between a tire and the display layer 52 may block the transfer of the antioxidant, which bleeds out from a tire, into the display layer 52 owing to the penetration-preventing ability of the halogenated butyl rubber therein, whereby the display layer 52 may be prevented from being discolored by a contaminating ingredient such as the antioxidant.

In addition to the above-mentioned rubber component, the rubber composition that constitutes the adhesive layer 53 may contain various additives generally used in the field of rubber industry. In particular, in case where the product body such as the tire body is formed of a black rubber composition, then the adhesive layer 53 may be made black by incorporating carbon black thereinto, whereby the color of the adhesive layer 53 may be made the same as that of the tire body so as to sharply individualize the color of the display information. Not specifically limited, the thickness of the adhesive layer 53 is preferably from 1/10 to 1/2 or so of the rubber thickness of the sidewall part outside the carcass layer of a tire, in case where the color seal is stuck to the sidewall part of a tire.

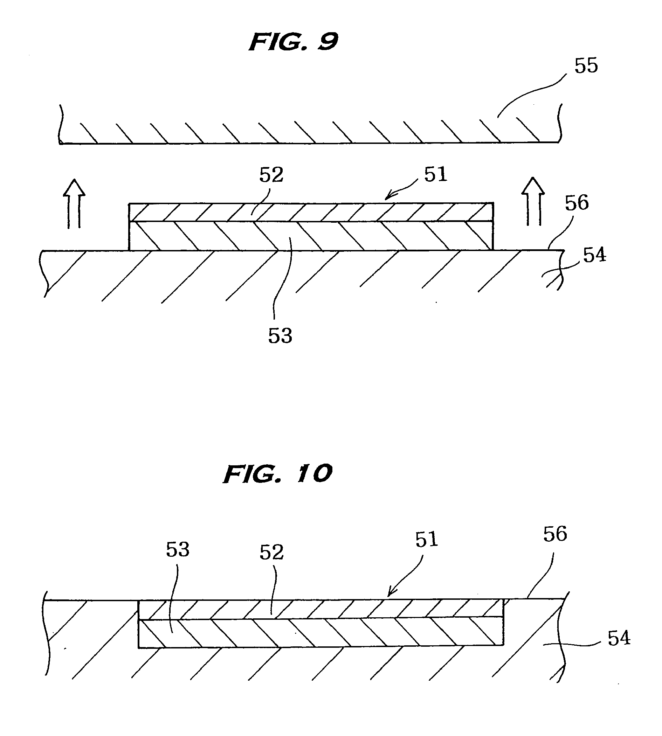

The color seal 51 may be stuck to an unvulcanized tire body 54, in a desired position of the outer surface 56 of the tire so that the adhesive layer 53 may face the outer surface 56 of the tire body 54, as in Fig. 9, during tire formation. The color seal 51 is vulcanized in a vulcanization mold 55 along with the tire body 54, whereby it is vulcanized and adhered to the outer surface 56 of the tire in such a condition that the display layer 52 is exposed outside. Precisely, the color seal 51 is stuck under pressure to the inner surface of the mold 55 by the vulcanization pressure, and, as in Fig. 10, the color seal 51 is vulcanized and adhered to the tire body 54, as buried in rubber. Accordingly, a pneumatic tire may be obtained, of which the tire surface 56 and the color seal 51 form a nearly flat face. In that manner, since the color seal 51 is integrally vulcanized and adhered to the outer surface of a tire in tire molding through vulcanization, its workability is excellent as compared with a case where a color seal is separately and additionally stuck to a vulcanized tire. In addition, the color seal may well follow tire deformation, and it may be prevented from peeling and dropping from a tire, and therefore its durability is good.

The color seal 51 may be first stuck to the outer surface of a tire and then put in the mold 55 for vulcanization therein; but apart from it, the color seal 51 may be first put at a predetermined position on the inner surface of the mold 55, and thereafter it may be stuck, vulcanized and adhered to the outer surface of the tire inside the mold 55.

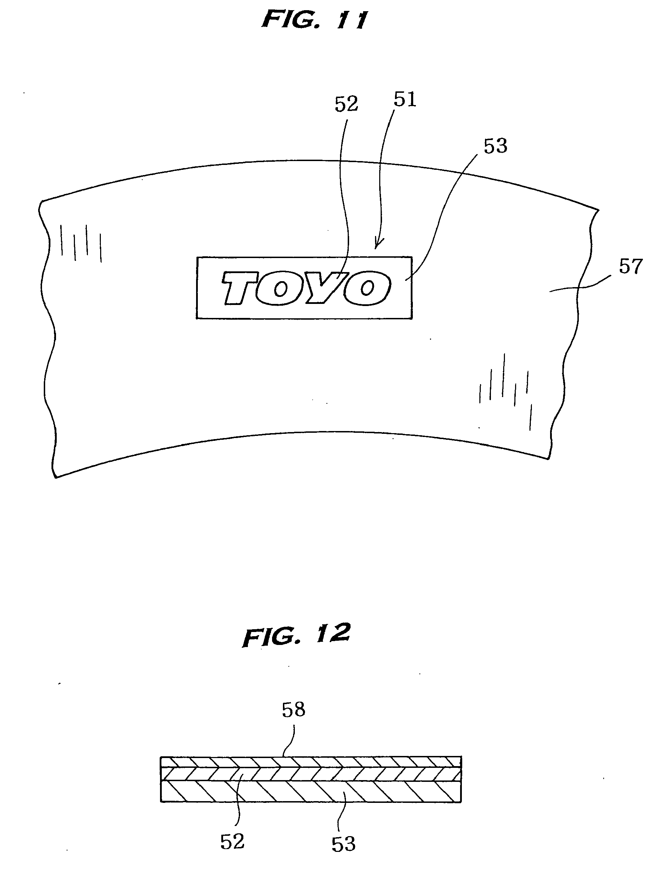

Not specifically defined, the position at which the color seal 51 is to stuck includes a sidewall part, a tread part, a bead part. Fig. 11 shows a pneumatic tire with a color seal 51 stuck to the sidewall part 57 of the tire, in which the color seal is stuck to the sidewall part 57 and its designing and decorative effect is thereby improved by the temperature-sensitive color-changing display layer 52, and, in addition, the color seal is helpful for visualizing the heating condition of the tire.

On the other hand, when the color seal is stuck to a tread part, then it may be worn away during driving, but it enables the visibility of the low-temperature brittleness condition of the tire before driving. In particular, in racing tires, the tread rubber is constituted to comprise a high Tg rubber, and it may be damaged by shock during rim construction or tire transportation; but since the low-temperature brittleness condition of the tires may be visualized by the color seal stuck thereto and since attention may be thereby roused in handling the tires, the color seal is also helpful for preventing the tires from being damaged during transportation, etc.

Fig. 12 shows a color seal of another example of this embodiment. In this example of a color seal 51 that comprises the above-mentioned display layer 52 and adhesive layer 53, a UV-preventive layer 58 is provided on the outer surface side of the display layer 52. Accordingly, UV rays are prevented from going into the display layer 52, and the display layer 52 may be prevented from being discolored by UV rays; and even if an antioxidant is transferred into the display layer 52, the increase in the discoloration owing to the reaction of the two may be prevented. In this case, the UV-preventive layer 58 is formed of a colorless transparent layer so as to visualize and recognize the sharp color display of the display layer 52.

### [Examples]

Examples of the invention are described below, to which, however, the invention should not be limited.

### [Application Example to Sidewall Part]

Using a Banbury mixer, rubber compositions of Examples 1 and 2 and Comparative Examples 1 to 3 were prepared according to the formulation shown in Table 1 below. In preparing them, clay that is a filler, and a pigment (red MB, temperature-sensitive color-changing material A to C), stearic acid and zinc flower were added to and mixed with a rubber component in the first step; and then in the second step, a vulcanizing agent and a vulcanization accelerator were added to and mixed with it to obtain a rubber composition.

In Table 1, "red MB" is a master batch prepared by adding a red pigment not changing its color with temperature change to rubber.

The "temperature-sensitive color-changing material A" and the "temperature-sensitive color-changing material B" are both temperature-sensitive color-changing microcapsules of, as encapsulated therein, a temperature-sensitive color-changing component that comprises an electron-donating coloring organic compound, an electron-accepting compound and a color-changing temperature controller; and these are powdery microcapsules themselves not in the form of a master batch with resin. The "temperature-sensitive color-changing material A" has a set temperature of 30°C; and this is a pigment that is red at a temperature lower than it and is colorless at a temperature higher than it. The "temperature-sensitive color-changing material B" has a set temperature of 29°C; and this is a pigment that is red at a temperature lower than it and is colorless at a temperature higher than it.

The "temperature-sensitive color-changing material C" is a dispersion prepared by dispersing the same microcapsules as those of the temperature-sensitive color-changing material B in a PVC solution (the colorant content is about 10 % by weight).

Using each obtained rubber composition as a part of a sidewall part, a pneumatic radial tire (tire size: 175/80R13) of one example of the first embodiment shown in Figs. 1 to 3 was produced by molding through vulcanization (160°C x 25 minutes) according to a known method. The obtained tires were tested for color change. The color change test is as follows: Every tire was left at an ambient temperature of 20°C and 40°C each for at least 1 hour, and after thus left, the tire was visually checked for the color of the temperature-sensitive color-changing rubber part formed of the above-mentioned rubber composition thereof.

As a result, as in Table 1, no color change depending on temperature occurred in Comparative Example 1 not containing a pigment and in Comparative Example 2 containing an ordinary red pigment. In Comparative Example 3 to which was added a master batch of microcapsules in PVC, the rubber part colored partially and the rubber composition could not uniformly color as a whole since the dispersibility of the microcapsules in the rubber component was poor and the microcapsules dispersed unevenly in the rubber composition. As opposed to these, in the tires of Example 1 and Example 2, the rubber part of the sidewall part that was red when left at 20°C (see Fig. 3A, in which the gray part 40 means that it is in red) changed to white when left at 40°C (see Fig. 3B). Accordingly, the tires confirmed their color change with temperature change, and the red coloration was uniform and good.

According to this embodiment as above, the color of the sidewall part may be changed with temperature change, and therefore the designing and decorative effect of the tire may be improved. In addition, depending on the way of setting the color-changing temperature of the temperature-sensitive color-changing material, this embodiment may make it possible to visualize an abnormal heat generation condition of a tire. Moreover, since the color-changing rubber part may be installed in a tire by molding and vulcanizing it together with a tire body, its workability is excellent as compared with a case where the rubber part is separately fitted to a molded and vulcanized tire later on, and it may solve the problem of durability such as peeling during driving. Furthermore, since a heat-resistant red pigment is used, it may still keep its color-changing effect even after tire production through molding and vulcanization.

**Table 1**

| | | | Comparative Example 1 | Comparative Example 2 | Comparative Example 3 | Example 1 | Example 2 |
|---|---|---|---|---|---|---|---|
| | Natural Rubber | RSS#3 | 50 | 50 | 50 | 50 | 50 |
| | Brominated Butyl Rubber | EXXON's "BrllR2255" | 50 | 50 | 50 | 50 | 50 |
| | Red MB | Sanyo Shikiso's "PIGMOTEX RED 2B" | - | 8 | - | - | - |
| | Temperature-sensitive Color-changing Material A | Nippon Capsule Products' "ETSD Powder Red-30P" | - | - | - | 8 | - |
| | Temperature-sensitive Color-changing Material B | Matsui Shikiso Chemical's "Chromicolor #27" | - | - | - | - | 8 |
| | Temperature-sensitive Color changing Material C | Matsui Shikiso Chemical's "Chromicolor PVC MB #27" | - | - | 8 | - | - |
| Formulation (parts by weight) | Clay | Takehara Chemical's "Hardbright" | 80 | 80 | 80 | 80 | 80 |
| | Stearic Acid | Kao's "Lunac S-20" | 3 | 3 | 3 | 3 | 3 |
| | Vulcanization accelerator | Sumitomo Chemical's "Soxinol D" | 0.5 | 0.5 | 0.5 | 0.5 | 0.5 |
| | Vulcanization accelerator | Ouchi Shinko Chemical's "Nocceler DM" | 2 | 2 | 2 | 2 | 2. |
| | Vulcanization accelerator | Atofina S.A.'s "Bultac 5" | 0.5 | 0.5 | 0.5 | 0.5 | 0.5 |
| | Zinc Flower | Mitsui Metal Mining's "Zinc Flower Type 1" | 3 | 3 | 3 | 3 | 3 |
| | Sulfur | Tsurumi Chemical's "Powder Sulfur" | 1.5 | 1.5 | 1.5 | 1.5 | 1.5 |
| Color Change Test | | left at 20°C | white | red | uneven color | red | red |
| | | left at 40°C | white | red | white | white | white |

### [Application Example to Color Differentiation Line]

Using a Banbury mixer, rubber compositions of Examples 3 and 4 and Comparative Examples 4 to 6 were prepared according to the formulation shown in Table 2 below. In preparing them, clay and titanium oxide as a filler, and a pigment (red pigment, temperature-sensitive color-changing material D to F) were added to and mixed with a rubber component in the first step; and then in the second step, a vulcanizing agent and a vulcanization accelerator were added to and mixed with it to obtain a rubber composition.

In Table 2, the "temperature-sensitive color-changing material D" and the "temperature-sensitive color-changing material E" are both temperature-sensitive color-changing microcapsules of, as encapsulated therein, a temperature-sensitive color-changing component that comprises an electron-donating coloring organic compound, an electron-accepting compound and a color-changing temperature controller; and these are powdery microcapsules themselves not in the form of a master batch with resin. The "temperature-sensitive color-changing material D" has a set temperature of 20°C; and this is a pigment that is red at a temperature lower than it and is colorless at a temperature higher than it. The "temperature-sensitive color-changing material E" has a set temperature of 19°C; and this is a pigment that is red at a temperature lower than it and is colorless at a temperature higher than it.

The "temperature-sensitive color-changing material F" is a dispersion prepared by dispersing the same microcapsules as those of the temperature-sensitive color-changing material E in PVC (the colorant content is about 10 % by weight).

Each obtained rubber composition was mixed with toluene in a ratio of rubber composition/toluene = 2/8 (by weight), and well dispersed in a stirrer to prepare a coating composition. This was applied to a tire tread as a color differentiation line, and vulcanized according to an ordinary method to produce a pneumatic radial tire (tire size: 185/70R14). The obtained tires were tested for color change. The color change test is as follows: Every tire was left at an ambient temperature of 5°C and 30°C each for at least 1 hour, and after thus left, the tire was visually checked for the color of the color differentiation line.

As a result, as in Table 2, no color change depending on temperature occurred in Comparative Example 4 not containing a red pigment and in Comparative Example 5 containing an ordinary red pigment not changing its color with temperature change. In Comparative Example 6 to which was added a master batch of microcapsules in PVC, uniform coloration could not be obtained since the dispersibility of the microcapsules in the rubber component was poor and the microcapsules dispersed unevenly in the rubber composition. As opposed to these, in the tires of Example 3 and Example 4, the color differentiation line that was red when left at 5°C changed to white when left at 30°C. Accordingly, the lines confirmed their color change with temperature change, and the red coloration was uniform and good.

**Table 2**

| | | | Comparative Example 4 | Comparative Example 5 | Comparative Example 6 | Example 3 | Example 4 |
|---|---|---|---|---|---|---|---|
| Formulation (parts by weight) | Natural Rubber | RSS#3 | 100 | 100 | 100 | 100 | 100 |
| | Red Pigment | Sanyo Shikiso's "PIGMOTEX RE02B" PIGMOTEX RED2B" | - | 30 | - | - | - |
| | Temperature-sensitive Color-changing Material D | Nippon Capsule Products' "ETSD Powder Red-20P" | - | - | - | 30 | - |
| | Temperature-sensitive Color-changing Material E | Matsui Shikiso Chemical's "Chromicolor #17" | - | - | - | - | 30 |
| | Temperature-sensitive Color-changing Material F | Matsui Shikiso Chemical's "Chromicolor PVC MB #17" | - | - | 30 | - | - |
| | Titanium Dioxide | Sakai Chemical's "TITONE A190" | 70 | 40 | 40 | 40 | 40 |
| | Clay | Takehara Chemical's "Hardbright" | 30 | 30 | 30 | 30 | 30 |
| | Vulcanization accelerator | Sumitomo Chemical's Soxinol D | 0.5 | 0.5 | 0.5 | 0.5 | 0.5 |
| | Vulcanization accelerator | Sumitomo Chemical's "Soxinol DM" | 2 | 2 | 2 | 2 | 2 |
| | Sulfur | Tsurumi Chemical's "Powder Sulfur" | 1.5 | 1.5 | 1.5 | 1.5 | 1.5 |
| Color Change | Test | left at 5°C | white | red | uneven color | red | red |
| | | left at 30°C | white | red | white | white | white |

### [Application Example to Color Seal]

A rubber composition having the formulation shown in Table 3 below was used as the adhesive layer of a color seal.

**Table 3**

| Ingredients | | amount (wt.pt.) |
|---|---|---|
| Natural Rubber | RSS#3 | 50 |
| Brominated Butyl Rubber | EXXON's "BrllR2255" | 50 |
| Carbon Black | GPF, Tokai Carbon's "Seast V" | 55 |
| Paraffin Oil | JOMO's "Process P200" | 5 |
| Stearic Acid | Kao's "Lunac S-20" | 1 |
| Antioxidant | Ouchi Shinko Chemical's "Nocrak SP" | 1 |
| Wax | Nippon Seiro's "OZOACE 0355" | 2 |
| Vulcanization accelerator | Sumitomo Chemical's "Soxinol DM" | 1 |
| Zinc Flower | Mitsui Metal Mining's "Zinc Flower Type 1" | 3 |
| Sulfur | Tsurumi Chemical's "Powder Sulfur" | 1.5 |

Using a Banbury mixer, rubber compositions for display layer of Examples 5 and 6 and Comparative Examples 7 to 9 were prepared according to the formulation shown in Table 4 below. In preparing them, clay that is a filler, and a pigment (red MB, temperature-sensitive color-changing material A to C), stearic acid and zinc flower were added to and mixed with a rubber component in the first step; and then in the second step, a vulcanizing agent and a vulcanization accelerator were added to and mixed with it to obtain a rubber composition. In Table 4, "red MB", "temperature-sensitive color-changing material A", "temperature-sensitive color-changing material B" and "temperature-sensitive color-changing material C" are the same as those in Table 1 above.

The rubber composition for adhesive layer was sheeted into a sheet having a thickness of 1 mm by calendering, and the rubber composition for display layer was sheeted on the obtained sheet surface, thereby laminating thereon a display layer having a thickness of 15 µm. Thus, a two-layered test color seal (30 x 60 mm) was produced. The obtained test color seal was stuck to the sidewall part of an unvulcanized tire at a predetermined position thereof, and vulcanized according to an ordinary method to produce a pneumatic radial tire (tire size: 185/70R14). The obtained tires were tested for color change. The color change test is as follows: Every tire was left at an ambient temperature of 20°C and 40°C each for at least 1 hour, and after thus left, the tire was visually checked for the color of display layer of the color seal.

As a result, as in Table 4, no color change occurred with temperature change in Comparative Example 7 not containing a pigment and in Comparative Example 8 containing an ordinary red pigment. In Comparative Example 9 to which was added a master batch of microcapsules in PVC, the display layer could not color uniformly as a whole since the dispersibility of the microcapsules in the rubber component was poor and the microcapsules dispersed unevenly in the rubber component. As opposed to these, in the tires of Example 5 and Example 6, the display layer that was red when left at 20°C changed to white when left at 40°C. Accordingly, the color seals confirmed their color change with temperature change, and the red coloration was uniform and good.

**Table 4**

| | | | Comparative Example 7 | Comparative Example 8 | Comparative Example 9 | Example 5 | Example 6 |
|---|---|---|---|---|---|---|---|
| | Natural Rubber | RSS#3 | 50 | 50 | 50 | 50 | 50 |
| | Chlorinated Butyl Rubber | EXXON's "CLllR1066" | 50 | 50 | 50 | 50 | 50 |
| | Red MB | of Sanyo Shikiso's "PIGMOTEX RED 2B" | - | 8 | - | - | - |
| | Temperature-sensitive Color-changing Material A | Nippon Capsule Products' "ETSD Powder Red-30P" | - | - | - | 8 | - |
| | Temperature-sensitive Color-changing Material B | Matsui Shikiso Chemical' s "Chromicolor PVC MB #27" | - | - | - | - | 8 |
| | Temperature -sensitive Color-changing Material C | Matsui Shikiso Chemical' s "Chronocolor PVC MB #27" | - | - | 8 | - | - |
| Formulation (parts by weight) | Clay | Takehara Chemical's "Hardbright" | 80 | 80 | 80 | 80 | 80 |
| | Stearic Acid | Kao's "Lunac S-20" | 3 | 3 | 3 | 3 | 3 |
| | Vulcanization accelerator | Sumitomo Chemical's "Soxinol D" | 0. 5 | 0.5 | 0.5 | 0. 5 | 0.5 |
| | Vulcanization accelerator | Sumitomo Chemical's "Soxinol DM" | 2 | 2 | 2 | 2 | 2 |
| | Vulcanization accelerator | Atofina S.A.'s "Bultac 5" | 0.5 | 0.5 | 0.5 | 0.5 | 0.5 |
| | Zinc Flower | Mitsui Metal Mining's "Zinc Flower Type 1" | 3 | 3 | 3 | 3 | 3 |
| | Sulfur | Tsurumi Chemical's "Powder Sulfur" | 1.5 | 1.5 | 1.5 | 1.5 | 1.5 |
| Color Change Test | | left at 20°C | white | red | uneven color | red | red |
| | | left at 40°C | white | red | white | white | white |

## Claims

1. A pneumatic tire provided with a temperature-sensitive color-changing rubber part formed through vulcanization of a rubber composition that comprises a rubber component, and temperature-sensitive color-changing microcapsules with, as encapsulated therein, a temperature-sensitive color-changing component of which the color may reversibly change with temperature change, and that is obtained by directly mixing and dispersing the microcapsules in the rubber component.

2. The pneumatic tire as claimed in claim 1, wherein the temperature-sensitive color-changing component comprises an electron-donating coloring organic compound, an electron-accepting compound, and a color-changing temperature controller.

3. The pneumatic tire as claimed in claim 1, wherein the rubber composition further contains a non-carbon black filler and the temperature-sensitive color-changing rubber part constitutes at least a part of the tire body.

4. The pneumatic tire as claimed in claim 3, wherein the temperature-sensitive color-changing rubber part constitutes at least a part of the sidewall part.

5. The pneumatic tire as claimed in claim 4, wherein the surface of the sidewall part is covered with a cover rubber layer of a black rubber layer, and the cover rubber layer partly covers the temperature-sensitive color-changing rubber part whereby a part of the temperature-sensitive color-changing rubber part not covered with the cover rubber layer is exposed outside to form a display information.

6. The pneumatic tire as claimed in claim 5, wherein a projection is provided in the surface of the sidewall part, and the cover rubber layer is peeled off at that projection whereby a part of the temperature-sensitive color-changing rubber part is exposed outside.

7. The pneumatic tire as claimed in claim 1, wherein the temperature-sensitive color-changing rubber part is formed by applying a coating composition comprising the rubber composition onto the outer surface of a tire and shaping it through vulcanization along with the tire body.

8. The pneumatic tire as claimed in claim 7, wherein the temperature-sensitive color-changing rubber part is a tire differentiation line or a color print formed by the coating composition on the tread surface.

9. The pneumatic tire as claimed in claim 1, which is provided with a color seal that comprises a display layer formed of the rubber composition for displaying an information and an adhesive layer for its adhesion to the outer surface of the tire and wherein the color seal is stuck to the outer surface of the tire and adhered thereto through vulcanization along with the tire body.

10. The pneumatic tire as claimed in claim 9, wherein an ultraviolet-preventive layer for preventing UV rays from going into the display layer is provided on the outer surface side of the display layer.

11. The pneumatic tire as claimed in claim 9, wherein the color seal is adhered through vulcanization in the rubber of the tire body as buried therein, and the tire outer surface and the color seal form a nearly flat face.

12. A color seal for tires, comprising a display layer capable of reversibly changing its color with temperature change for displaying an information, and an adhesive layer for adhering it to the outer surface of a tire, wherein;
the display layer is formed of a rubber composition that comprises a rubber component and temperature-sensitive color-changing microcapsules with, as encapsulated therein, a temperature-sensitive color-changing component of which the color may reversibly change with temperature change, and is obtained by directly mixing and dispersing the microcapsules in the rubber component.

13. The color seal for tires as claimed in claim 12, wherein an ultraviolet-preventive layer for preventing UV rays from going into the display layer is provided on the outer surface side of the display layer.

14. The color seal for tires as claimed in claim 12, wherein the temperature-sensitive color-changing component comprises an electron-donating coloring organic compound, an electron-accepting compound, an a color-changing temperature controller.
